# EUROPEAN PATENT APPLICATION

(11) **EP 2 107 372 A1**
(43) Date of publication of application: **07.10.2009**
(21) Application number: 09155548.2
(22) Date of filing: 18.03.2009
(51) Int. Cl.: G01N 31/22, G01N 21/29, G01N 21/78

(54) **Paper tapes sensitive to multiple gases**

(30) Priority: 31.03.2008 US 58979
(71) Applicant: Honeywell International Inc., Morristown, NJ 07962 (US)
(72) Inventor: McBrady, Adam Dewey, Minneapolis, MN 55403 (US); Hogan, Patrick, Vernon Hills, IL 60061 (US); Rivera, Nelson, Hoffman Estates, IL 60192 (US)
(74) Representative: Buckley, Guy Julian

(57) **Abstract**

A sampling tape carries a plurality of elongated, spaced apart, gas sensitive regions which respond to different toxic gases. The regions can be in the form of elongated tracks which can be scanned simultaneously at multiple locations. A group of scanning locations along a track can provide sample signals for a selected gas from a plurality of locations. Signals from another track can relate to a different gas.

## Description

### FIELD

The invention pertains to tapes which carry gas responsive materials usable in monitoring ambient gases in a region. More particularly, the invention pertains to such tapes which carry axially extending tracks of materials that can simultaneously respond to different gases.

### BACKGROUND

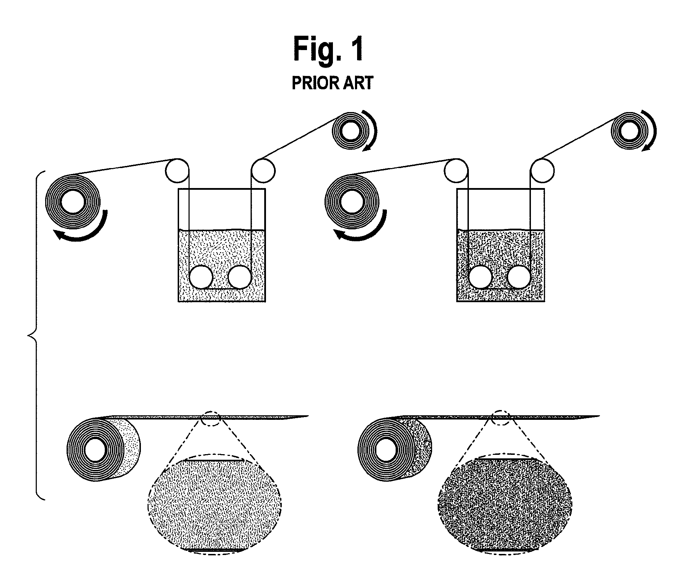

Known processes of producing toxic gas sensitive paper tapes results in a roll with a chemical reagent (many chemicals that combine to form toxic gas sensitive material) impregnated across the entire width of the paper tape. One example of how to produce this tape is a method which submerges the tapes in a bath of chemical reagent prior to drying the reagent and re-winding the roll. Two examples of known production schemes and resulting tapes are illustrated in Fig. 1.

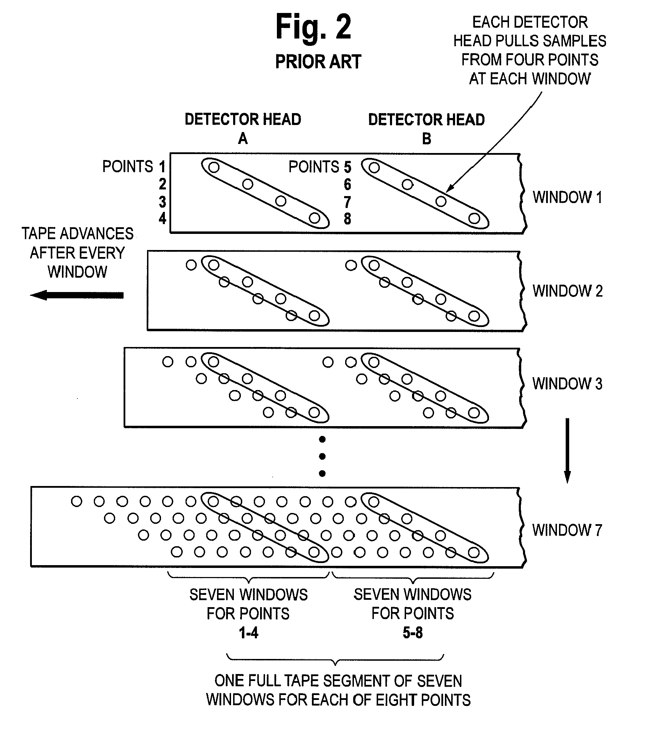

In known systems, the tape is sampled at multiple locations at once. The tape is about 1" wide. In an example of prior art sensing, illustrated in Fig. 2, eight locations are sampled at once. These locations are sampled along two diagonals where sample points 1,5; 2,6; 3,7 and 4,8 form straight lines parallel to the paper tape's edge.

The gas being sampled is pulled through the paper tape and if a toxic gas to which the chemical reagent is sensitive is present a color change occurs. That color change can be monitored via any number of optical measurements, and calibrated to correspond to a concentration of the toxic gas.

In all of these instruments each sampling location pulls a unique air sample. The example above would be capable of monitoring the concentration of one gas family at eight different locations at once. Other configurations can pull a gas being monitored through different numbers of reagent samples.

Since known tapes carry only a single gas sensitive material, multiple tapes must be exposed at a site to monitor the concentrations of different gases. These do not represent as efficient or cost effective approaches as would be desired.

There is thus a continuing need to monitor a variety of different toxic gases simultaneously in a more cost effective fashion than has heretofor been possible. It would also be desirable to be able to reduce the number of required sampling sites while still monitoring multiple gases simultaneously.

### BRIEF DESCRIPTION OF THE DRAWINGS

Fig. 1 illustrates known tape production methods;

Fig. 2 illustrates known tape sensing methods;

Fig. 3 illustrates a tape manufacturing process in accordance with the invention;

Fig. 4 illustrates additional aspects or the method of Fig. 3; and

Fig. 5 is a block diagram of an exemplary tape reader in accordance with the invention.

### DETAILED DESCRIPTION

While embodiments of this invention can take many different forms, specific embodiments thereof are shown in the drawings and will be described herein in detail with the understanding that the present disclosure is to be considered as an exemplification of the principles of the invention, as well as the best mode of practicing same, and is not intended to limit the invention to the specific embodiment illustrated.

In embodiments of the invention, multiple lines or tracks of chemicals are formed on a substrate such as a roll of paper or plastic tape. The tracks could extend continuously along the tape, or be discontinuously formed by pluralities of circles, squares, or other shapes of deposited material which extend axially along the tape.

The chosen chemical tracks could include the same chemical reagent or multiple chemical reagents with multiple gas sensitivities. As such, one paper tape could detect multiple chemical families. For example one embodiment would be able to detect four different chemical families.

If used with an eight-point reader or sampling manifold, the paper tape could be used to monitor the concentration of four chemical species at two locations. This however is widely variable depending on the sampling manifold and is not be a limitation of the invention.

In one aspect of the invention, various exemplary methods can be used to deposit the reagents. In one process in accordance with the invention, drop formation devices such as micro solenoid valves, inkjet printers, piezoelectric, acoustic, or thermal could be used. Another type of dispenser could be an aerosol or spray-based dispensing head. A third could be to pump a small volume of reagent out of a small orifice or tube.

Both the first and second options could include a liquid pump, if desired, associated with them to deliver the reagent. The third type of dispensing could use an applied force (peristaltic, syringe, capillary) to deliver the reagent to the print head and onto the paper tape. It will be understood that various deposition methods come within the spirit and scope of the invention.

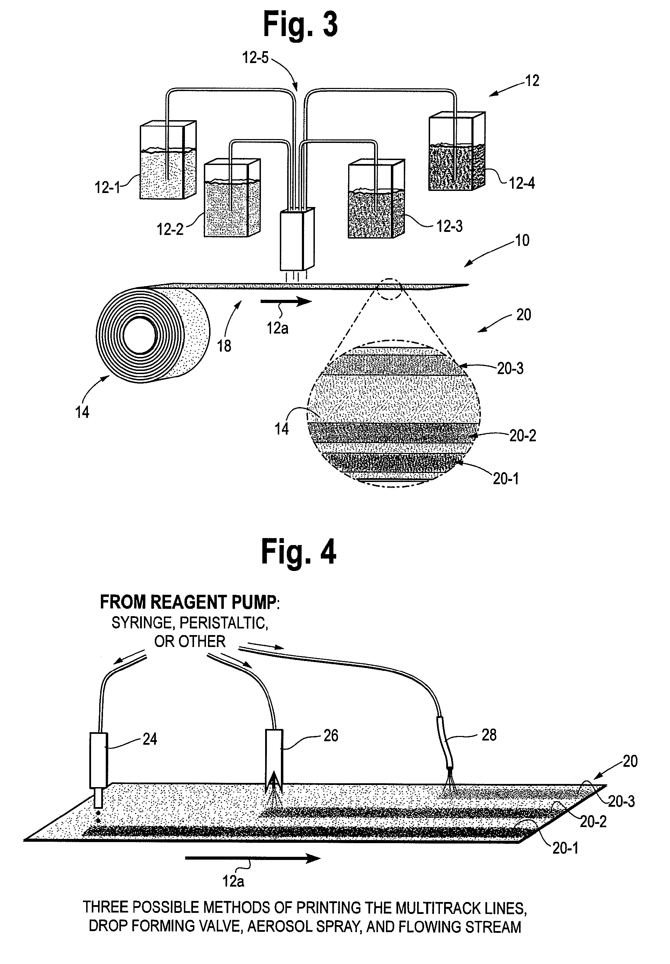

Fig. 3 illustrates a multi-gas sensitive tape 10 being formed by an apparatus 12. Apparatus 12 extracts a substrate 14, paper or plastic, from a roll and moves it in a direction 12a past a deposition location 18. At location 18 a plurality of gas sensitive materials, or reagents, can be applied to substrate 14 using material from a plurality of reservoirs such as 12-1, -2, -3 and -4. Those materials can be selectively deposited on the substrate 14 by a unit 12-5.

The various materials can be deposited onto substrate 14, see enlargement 20, in the form of spaced apart, continuously extending axial tracks 20-1, 20-2 and 20-3. Each of the deposited tracks 20-i can be sensitive to a different gas. None of the number of deposited tracks, nor their width nor their spacing represent limitations of the invention. Alternately, instead of a continuously extending track, such as 20-1, a discontinuous, axially extending series of axially spaced apart areas, or dots can be deposited onto substrate 14. In yet another embodiment, continuous tracks can be used in combination with discontinuously formed tracks or sequences of dots or areas.

Fig. 4 illustrates various types of deposition units. These include drop depositing devices, such as 24, sprayers 26 or pumped outputs, illustrated at 28. Other types of deposition units come within the spirit and scope of the invention.

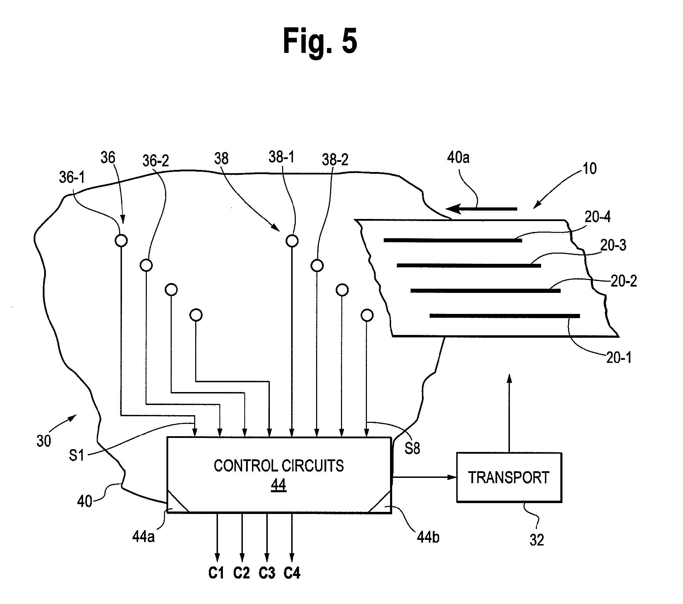

Fig. 5 is a block diagram of a multi-track tape sensing or reader unit 30 in accordance with the invention. The unit 30 includes a transport mechanism 32 which can advance a multi-track tape 10 which has been exposed to a plurality of air-born toxic gases. Tape 10 carries four tracks 20-1, -2, -3 and -4, as discussed above, which are sensitive to up to four different gases. In the embodiment of Fig. 5, the unit 30 includes two pluralities of color responsive optical sensors 36, 38 carried by a housing 40.

Pairs of sensors such as 36-1 and 38-1 are associated with and respond to color changes on a common track such as 20-4. Sensors 36-4 and 38-4 respond to color changes on track 20-1. It will be understood that neither the numbers of sensors associated with a track, nor their configuration are limitations of the present invention.

Output signals from sensors 36, 38 are coupled to control circuits 44. Control circuits 44 which might be implemented with one or more programmable processors 44a and executable control software 44b, respond to the signals S1...S8.

Control circuits 44 evaluate signals such as S1 and S5, associated with a common track 20-4 and establish a gas concentration in response thereto. Control circuits 44 can actuate the transport mechanism 32 to advance tape 10, in direction 40a to provide an on going sequence of sampled locations on tape 10 to the sensors 36, 38.

By configuring unit 30 such that circuits 44 track signals such as Si, Sj associated with a common track, as the tape 10 is advanced by mechanism 32, a sequence of signals from sensors such as 36-1 and 38-1, relative to a common track, such as 20-4 can be analyzed to establish a concentration C1 for the gas to which the material on track 20-4 responds. Similarly, concentration C2 can be established for the gas to which the material on track 20-3 responds using signals S2 and S6, and incorporating as many samples thereof as desired. Similar comments apply to sensor pairs 36-3, 38-3 and 36-4, 38-4.

Signals, from sensor pairs, for a common gas, such as 36-1, 38-1 can be sensed substantially simultaneously. Further signals indicative of concentrations of different gases can also be detected by circuits 44 substantially simultaneously if desired. Hence, concentrations for up to four gases in the embodiment of Fig. 5, can be established substantially simultaneously off of a single multi-track tape. Detectable gases include, but are not limited to, chlorine, chlorine dioxide, fluorine, hydrogen cyanide, hydrogen sulfide, nitrogen dioxide and phosgene.

In yet another embodiment of the invention, a multi-track, or multi-strip tape can be used to measure a common species of gas in different concentration ranges. In such embodiments, sampling times or flow rates need not be altered to take into account different concentration ranges since formulations of different tracks can be adjusted to respond to respective ranges of gas concentrations.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. A gas responsive tape comprising:
an elongated substrate; and
a plurality of elongated, gas responsive regions formed on the substrate with at least one of the regions responsive to a first gas and with at least another of the regions responsive to a second, different gas.

2. A tape as in claim 1 where the regions are each formed, at least in part, as one of a continuously extending, gas sensitive track, or, a plurality of spaced apart gas sensitive areas that extend axially along the tape.

3. A tape as in claim 2 where the areas are each bounded by a selected, closed perimeter of a predetermined shape.

4. A tape as claim 1 where the substrate is formed from a member of a class which includes paper and plastic.

5. A tape as in claim 4 where the regions are formed as elongated, spaced apart strips on the substrate.

6. A tape as in claim 4 where the regions extend axially along the substrate.

7. A tape as in claim 1 where the first gas is selected from a class which includes at least mineral acids, hydrides, amines and hydrazines.

8. A tape as in claim 7 where the second, different gas is selected from a class which includes at least mineral acids, hydrides, amines and hydrazines.

9. A tape as in claim 2 where the regions are deposited by at least one of attracting droplets of gas responsive material toward the substrate, spraying gas responsive material toward the substrate, or, pumping gas responsive material toward the substrate.

10. A tape as in claim 1 where at least some of the regions are spaced apart from one another.
